# EUROPÄISCHE PATENTSCHRIFT

(11) **EP 3 185 688 B1**
(45) Veröffentlichungstag und Bekanntmachung des Hinweises auf die Patenterteilung: **31.03.2021**
(21) Anmeldenummer: 15775078.7
(22) Anmeldetag: 12.08.2015
(51) Int. Cl.: A22B 5/00

(54) **VORRICHTUNG UND VERFAHREN ZUR TIERSCHUTZEINHALTUNGSBEWERTUNG AN EINEM SCHLACHTTIER**
APPARATUS AND METHOD FOR ASSESSING COMPLIANCE WITH ANIMAL WELFARE ON AN ANIMAL FOR SLAUGHTER
DISPOSITIF D'ÉVALUATION DU RESPECT DE LA PROTECTION DES ANIMAUX CONCERNANT UN ANIMAL DE BOUCHERIE

(30) Priorität: 29.08.2014 DE 102014012558; 29.08.2014 DE 202014006905 U
(43) Veröffentlichungstag der Anmeldung: 05.07.2017
(73) Patentinhaber: CSB-System SE, 52511 Geilenkirchen (DE)
(72) Erfinder: SCHIMITZEK, Peter, 52511 Geilenkirchen (DE)
(74) Vertreter: Weihrauch, Frank
(86) Internationale Anmeldenummer: PCT/DE2015/000399
(87) Internationale Veröffentlichungsnummer: WO 2016/029893

(56) Entgegenhaltungen:
- DE-A1-102014 009 686
- US-A- 5 980 377
- US-A1- 2006 126 903
- US-A1- 2014 029 808
- US-B1- 6 299 524

## Beschreibung

Die Erfindung betrifft ein Verfahren zur Bewertung der Einhaltung von Tierschutzmaßnahmen an einem Schlachttier gemäß Anspruch 1.

Der vorliegenden Erfindung liegt die generelle Anforderung zugrunde, dass insbesondere bei der Züchtung von Schlachttieren geltende Gesetzesauflagen zum Tierschutz eingehalten werden müssen.

Hierzu wird durch den Gesetzgeber gefordert, tierbezogene Merkmale, im Gesetz als Tierschutzindikatoren bezeichnet, an einem Nutztier zu erheben und zu bewerten, um so eine Aussage darüber treffen zu können, ob in einem Zuchtbetrieb die geltenden Tierschutzauflagen erfüllt werden oder ob diesbezüglich Nachbesserungen innerhalb des Zuchtbetriebes vorgenommen werden müssen. An einem Schlachttier vorhandene Bissspuren, Schlagspuren, Elektrodenmarken, Spuren von Tätowiereisen sowie Schwanz- oder Ohrverletzungen, werden als Abweichungen von einer tierschutzkonformen Ausbildung der Tierschutzindikatoren erfasst.

Eine solche Erfassung der Abweichungen kann zudem innerhalb einer Schlachttierverarbeitung zur Beurteilung der Fleischqualität zweckmäßig sein, da die Fleischqualität derart in einem Zusammenhang mit den Tierschutzindikatoren stehen kann, dass bei Vorliegen entsprechender Abweichungen von einer tierschutzkonformen Ausbildung an dem Schlachttier eine schlechtere Fleischqualität resultiert. Beispielsweise können in diesem Zusammenhang ein prämortaler Stress durch eine Beißerei zu einem erhöhten Tropfsaftverlust oder Schlagspuren zu blutigen Edelteilen des Schlachttieres führen.

Aus dem Stand der Technik ist es bereits bekannt, im Rahmen einer Eingangskontrolle in einem Schlachtbetrieb, das jeweilige Schlachttier auf Tierschutzindikatoren zu überprüfen. Eine derartige Überprüfung wird hierbei manuell durch entsprechend geschultes Personal vorgenommen.

Die Nachteile einer solchen Überprüfung bestehen jedoch insbesondere darin, dass zum einen durch das Bereitstellen des erforderlichen Personals entsprechende Kosten verursacht werden und dass zum anderen bei einer manuellen Überprüfung nur vergleichsweise geringe Durchsätze bereitstellbar sind, wodurch ein sich anschließender Schlachttierverarbeitungsprozess unter Umständen verzögert wird.
Zudem erfolgt die Bewertung der Abweichungen von der tierschutzkonformen Ausbildung der Tierschutzindikatoren stets in subjektiver Betrachtung durch das Personal, wobei sich Beurteilungsschwankungen zwangsläufig ergeben und Beurteilungsfehler nicht ausgeschlossen werden können.
Ferner ist es aus dem Stand der Technik beispielsweise aus US 6 299 524 B1 bekannt, Knochenbrüche an einem Schlachttier anhand der äußeren Form zu erkennen. Zudem ist es auf dem Gebiet der Beurteilung des körperlichen Zustandes von lebenden Nutztieren, dem sogenannten Body Condition Score, aus dem Stand der Technik aus US 2006/126 903 A1 bekannt, aus einem Oberflächenrelief Aussagen über einen Ernährungszustand herzuleiten. Auch US 2014/029 808 A1 offenbart eine Lösung zur Bestimmung des Body Condition Score eines Nutztieres DE102014009686 betrifft ein Verfahren zur Erfassung schlachttierbezogener Daten, insbesondere zur Erfassung vorhandener Markierungen, an einem Schlachttier.

Die Aufgabe der vorliegenden Erfindung besteht darin, ein Verfahren zur Tierschutzeinhaltungsbewertung an einem Schlachttier bereitzustellen, welches eine kostengünstige, effiziente und zudem objektive Bewertung der Einhaltung tierschutzrelevanter Maßnahmen ermöglicht.

Die Aufgabe wird durch ein Verfahren mit den im Patentanspruch 1 aufgeführten Merkmalen gelöst. Bevorzugte Weiterbildungen ergeben sich aus den jeweiligen Unteransprüchen.

Eine erfindungsgemäße Vorrichtung zur Tierschutzeinhaltungsbewertung wird insbesondere im Rahmen einer Eingangskontrolle, vorzugsweise nach Tötung, Brühung, Flambierung und Bürstung, jedoch möglichst vor einer Spaltung eines Schlachttieres, in einem Schlachtbetrieb eingesetzt und dient dazu, das für die Verarbeitung vorgesehene Schlachttier auf eventuell vorhandene, tierschutzrelevante Normabweichungen von festgelegten Tierschutzindikatoren zu überprüfen.

Als Tierschutzindikatoren im Sinne der Anmeldung werden tierbezogene Merkmale verstanden, welche eine Beurteilung einer tierschutzgerechten Haltung des Schlachttieres ermöglichen. Als Tierschutzindikatoren werden hierbei beispielsweise Hautfarbe, Hautoberflächenbeschaffenheit, äußere Umrisse oder physische Merkmale, wie die Unversehrtheit aller Körperteile, definiert. Liegen die Tierschutzindikatoren in einer normgerechten Ausbildung vor, stellen diese Indizien für eine tierschutzgerechte Haltung und somit für die Einhaltung von Tierschutzbestimmungen dar. Die normgerechte Ausbildung wird auch als tierschutzkonforme Ausbildung bezeichnet.

Unter Normabweichungen werden demgegenüber nachfolgend konkrete Abweichungen des überprüften Schlachttieres von den definierten normgerechten Ausbildungen der Tierschutzindikatoren verstanden. Nicht normgerechte Ausbildungen werden auch als nicht tierschutzkonforme Ausbildungen bezeichnet. Diese ermöglichen eine Erkennung einer nicht tierschutzgerechten Haltung des Schlachttieres oder geben Anlass für weiterführende Untersuchungen.

Die Vorrichtung weist eine Bilderfassungseinheit mit einem Bilderfassungsbereich auf, in welchem ein Abschnitt einer Oberfläche des Schlachttieres optisch erfassbar ist und in welchem zudem Bildpunkte in dem Abschnitt der Oberfläche erfassbar sind.
Hierzu wird das Schlachttier, beispielsweise an einer Rohrbahn hängend, an der Bilderfassungseinheit so vorbei geführt, dass der relevante Abschnitt der Oberfläche des Schlachttieres in dem Bilderfassungsbereich erfassbar ist.
Der relevante Abschnitt der Oberfläche des Schlachttieres wird vorliegend durch die gesamte Oberfläche oder einen vorher festgelegten Teilabschnitt der gesamten Oberfläche des Schlachttieres gebildet.

Die Bilderfassungseinheit ist ebenfalls dazu in der Lage, Bildpunktdaten der Bildpunkte, insbesondere Flächenkoordinaten und Helligkeits- oder Farbwert der Bildpunkte, übertragbar bereitzustellen, wobei die Bereitstellung der Bildpunktdaten vorzugsweise in Echtzeit erfolgt.
Erfindungsgemäß ist es hierbei auch möglich, Bildpunktdaten mehrerer Bildpunkte zu einem Datenpaket zusammenzufassen und dieses anschließend übertragbar bereitzustellen.

Die Vorrichtung weist ferner eine Auswertungseinheit auf, welche drahtgebunden oder drahtlos mit der Bilderfassungseinheit verbunden ist und mittels derer die Bildpunktdaten erfassbar sind.
In der Auswertungseinheit ist vorliegend ein normatives Modell eines Schlachttieres hinterlegt.
Das normative Modell beinhaltet erfindungsgemäß eine tierschutzkonforme Ausbildung der tierbezogenen Merkmale, also der Tierschutzindikatoren, und kann sowohl konkrete Farbgebungen, Hautoberflächenbeschaffenheit als auch äußere Umrisse oder andere, für die Beurteilung der tierschutzgerechten Haltung relevante, Merkmale des Schlachttieres aufweisen. Das normative Modell kann vorzugsweise sowohl positiv als auch negativ definiert sein. Als Positiv-Definition ist die Festlegung zu verstehen, wie ein tierbezogenes Merkmal bei tierschutzkonformer Behandlung ausgebildet ist. Als Negativ-Definition ist zu verstehen, wie ein tierbezogenes Merkmal bei bestimmten Verstößen gegen eine tierschutzkonforme Behandlung ausgebildet ist, sodass die Abwesenheit einer solchen Ausbildung als tierschutzkonforme Ausbildung festgelegt ist. Zudem sind bestimmte Verletzungen der Tierschutzbestimmungen besonders zuverlässig detektierbar.

Das normative Modell kann insbesondere normative Bildpunktdaten bereitstellen, welche nachfolgend auch als Referenzbildpunktdaten bezeichnet werden.

Die Auswertungseinheit ist erfindungsgemäß dazu in der Lage, die durch die Bilderfassungseinheit bereitstellbaren Bildpunktdaten in eine Beziehung zu dem normativen Modell zu setzen und eine Abweichung der Bildpunktdaten von dem normativen Modell zu ermitteln.
Hierbei werden vorzugsweise die Bildpunktdaten mit den entsprechend korrespondierenden Referenzbildpunktdaten abgeglichen und die Abweichung der Bildpunktdaten von den Referenzbildpunktdaten, beispielsweise im Bezug auf Flächenkoordinaten oder Helligkeits- beziehungsweise Farbwerte, ermittelt.

Um eine Abweichung der Bildpunktdaten von denen der Referenzbildpunktdaten zu ermitteln, können die Bildpunktdaten beispielsweise in ein Koordinatensystem übertragen werden, in welchem die Referenzbildpunktdaten bereits hinterlegt sind. Auf diese Weise wird es auch ermöglicht, dass anhand der Bildpunktdaten ein visuell darstellbares Modell des überprüften Schlachttieres erstellt und dieses anschließend mit dem normativen Modell, welches in diesem Fall als visuell darstellbares, normatives Modell vorliegt, verglichen werden kann.

Um eine nachgelagerte Überprüfung zu ermöglichen, kann in einer vorteilhaften Weiterbildung ein solcher Vergleich der visuell darstellbaren Modelle zusätzlich auch durch ein geeignetes Personal vorgenommen werden.

Der beschriebene Auswertungsalgorithmus mittels Referenzbildpunktdaten ist als beispielhafte Erläuterung zu verstehen. Es kann jedoch jeder geeignete AIgorithmus für Bildauswertungen einschließlich Objekterkennung und Klassifikation zum Einsatz kommen.

Die Auswertungseinheit ist darüber hinaus dazu in der Lage, die ermittelte Abweichung der Bildpunktdaten von dem normativen Modell als Normabweichung des Schlachttieres von dem normativen Modell ausgebbar bereitzustellen.

Das ausgebbare Bereitstellen der Normabweichung erfolgt beispielsweise anhand einer Bilddarstellung oder anhand eines definierten Ausgabewertes, aus welchem insbesondere die Art und/oder die Häufigkeit des Auftretens der jeweiligen Normabweichung oder deren Ausprägung hinsichtlich Intensität, Größe oder Farbe, hervorgehen.

Die Vorrichtung weist insbesondere den Vorteil auf, dass vorhandene Normabweichungen automatisiert erfasst werden und somit der notwendige Zeitaufwand für die Überprüfung des Schlachttieres gegenüber herkömmlichen Methoden deutlich reduziert werden kann.

Zudem können durch die automatisierte Erfassung und Auswertung Varianzen und Fehler bei der Beurteilung der Ausbildung der Tierschutzindikatoren vermieden werden. Weiterhin können die Ergebnisse der Feststellung automatisiert in eine Datenhaltung übertragen werden. Zudem können die Kosten für eine Überprüfung des Schlachttieres durch den Verzicht auf Personal gesenkt werden.

In einer bevorzugten Weiterbildung der Erfindung wird die Bilderfassungseinheit durch eine Mehrzahl Bildkameras gebildet, wobei jede Bildkamera einen Bilderfassungsteilbereich aufweist, und wobei die Bildkameras vorzugsweise so angeordnet sind, dass mittels der Bilderfassungsteilbereiche das gesamte Schlachttier erfassbar ist.

Die Bilderfassungsteilbereiche bilden zusammengefasst den Bilderfassungsbereich, wobei in jedem Bilderfassungsteilbereich Bildpunkte eines Abschnitts der Oberfläche des Schlachttieres erfassbar sind und wobei die Bildpunktdaten der Bildpunkte jedes Bilderfassungsteilbereichs übertragbar bereitstellbar sind.

Die Zusammenführung der Bildpunktdaten wird anschließend durch die Auswertungseinheit vorgenommen, wobei alternativ auch eine Zusammenführung der Bildpunktdaten bereits in der Bilderfassungseinheit erfolgen kann.

Ein Vorteil besteht in der Vermeidung oder Reduzierung von Okklusionseffekten.

Soweit sich Bilderfassungsteilbereiche überschneiden, können die Bildpunktdaten der mehreren Kameras für den Überschneidungsbereich für die Auswertung zusammengezogen werden. Dies ermöglicht eine Erhöhung der Erfassungs- und Auswertungssicherheit insbesondere durch Vermeidung von Doppeldetektionen von ein und derselben Normabweichung. Ferner kann die räumliche Auflösung erhöht werden, wobei durch geeignete Anordnung der mehreren Kameras die Überschneidungsbereiche vorzugsweise so bereitsgestellt werden, dass die gesamte Oberfläche von Überschneidungsbereichen erfasst wird. Dies kann zudem eine 3D-Erfassung ermöglichen.

In einer anderen Variante sind durch die Bildkamera oder die Bildkameras unter Ausnutzung der Transportbewegung des Schlachttiers Bildsequenzen aufnehmbar, wobei die Bildpunktdaten der Einzelaufnahmen in der Auswertung zusammengezogen werden und so als Vorteil die Auflösung verbesserbar und auch hier eine 3D-Erfassung möglich ist.

In einer weiteren Variante sind mittels einer Kameranachführung Bildsequenzen aufnehmbar, wobei auch hier die Bildpunktdaten der Einzelaufnahmen in der Auswertung zusammengezogen werden und so als Vorteil die Auflösung verbesserbar und auch hier eine 3D-Erfassung möglich ist. Die Kameranachführung kann mechanisch, beispielsweise durch Übertragung einer Bewegung des Transportsystems, oder intelligent, beispielsweise durch Positionsanalyse des Schlachttiers im Bild, erfolgen.

Des Weiteren ist die Normabweichung in einer vorteilhaften Variante der Erfindung klassifizierbar und klassifiziert ausgebbar bereitstellbar.

Die Klassifizierung der Normabweichung wird vorzugsweise durch die Auswertungseinheit vorgenommen, wobei die Normabweichung anhand deren Ausprägung einer vorher festgelegten Klasse zugeordnet wird.

Die Festlegung konkreter Klassen von Normabweichungen kann hierbei beispielsweise innerhalb eines Trainingszyklusses vorgenommen werden.

Die Klassifizierung der erfassten Normabweichung bietet insbesondere den Vorteil, dass bereits an dieser Stelle eine Aussage sowohl über den Grad, als auch über die Art der Normabweichung getroffen werden kann. Eine nachträgliche Überprüfung der Normabweichung durch Personal ist somit verzichtbar. Die klassifizierte Normabweichung ist ferner durch die Auswertungseinheit ausgebbar bereitstellbar, was bedeutet, dass die Auswertungseinheit dazu in der Lage ist, die Normabweichung definiert nach Klasse und Art, beispielsweise als konkrete Bezeichnung oder als bildliche Darstellung ausgebbar bereitzustellen. Die Normabweichung kann anschließend beispielsweise mittels einer Visualisierungseinrichtung dargestellt oder zur Speicherung an eine Datenbank und/oder weiteren Verwendung an eine elektronische Datenverarbeitungsanlage übermittelt werden.

Gemäß der Erfindung ist die erfasste Normabweichung einem schlachttierbezogenen Datensatz zuordenbar.

Ein solcher schlachttierbezogener Datensatz wird in diesem Fall für jedes Schlachttier angelegt, welches den entsprechenden Schlachttierverarbeitungsprozess durchläuft, und enthält insbesondere weiterführende Angaben zu dem Schlachttier. Diesbezüglich kann der schlachttierbezogene Datensatz beispielsweise Angaben zur Art und Herkunft des Schlachttieres, zu dessen Geschlecht oder zu dessen Gewicht und Abmessungen enthalten.

Die Zuordnung der erfassten Normabweichung zu dem schlachttierbezogenen Datensatz ermöglicht als Vorteil insbesondere eine ausführliche Archivierung der Angaben zu dem jeweiligen Schlachttier und damit einhergehend eine langfristige Nachvollziehbarkeit der notwendigen Angaben für die Tierschutzeinhaltungsbewertung.

In einer bevorzugten Ausbildung der erfindungsgemäßen Vorrichtung sind anhand der erfassten Normabweichung externe Einheiten ansteuerbar. Bei derartigen externen Einheiten handelt es sich insbesondere um Sortiereinheiten, welche dazu in der Lage sind, auf Basis der erfassten Normabweichung das überprüfte Schlachttier beispielsweise aus dem laufenden Schlachttierverarbeitungsprozess auszuschleusen und einer Nachkontrolle und/oder einer spezifischen Weiterverarbeitung zuführen.

Bei der vorliegenden Ausbildung wird anhand der erfassten Normabweichung beispielsweise ein Steuersignal durch die Auswertungseinheit generiert und dieses unmittelbar oder mittelbar über eine zentrale Prozessteuerung an die externen Einheiten übermittelt.
Eine vorteilhafte Weiterbildung der Vorrichtung sieht vor, dass die Bilderfassungseinheit mindestens eine Tiefenkamera mit einem Tiefenkameraerfassungsbereich aufweist, wobei in dem Tiefenkameraerfassungsbereich der Abschnitt der Oberfläche des Schlachttieres optisch erfassbar ist und wobei in dem Tiefenkameraerfassungsbereich Bildpunkte erfassbar sind.
Die Bilderfassungseinheit ist vorliegend dazu in der Lage, Raumkoordinatendaten der erfassten Bildpunkte, welche sich aus den Flächenkoordinaten (x, y) und einem Tiefenwert (z) zusammensetzen, übertragbar bereitzustellen.

Bei den durch die Tiefenkamera erfassten Bildpunkten kann es sich vorliegend um die gleichen Bildpunkte handeln, welche auch durch eine Bildkamera der Bilderfassungseinheit erfasst werden. Alternativ können sich auch die erfassten Bildpunkte der Tiefenkamera von denen der Bildkamera unterscheiden, um auf diese Weise zum Beispiel bestimmte Bereiche der Oberfläche des Schlachttieres nur mit der Tiefen- oder der Bildkamera zu erfassen.

Der besondere Vorteil der Tiefenkamera besteht vorliegend darin, dass durch diese Normabweichungen erfassbar sind, welche sich durch Höhenunterschiede der Oberfläche des Schlachttieres definieren. Derartige Normabweichungen können beispielsweise Schwellungen, Bissspuren, Ohrverletzungen oder Eiterbeulen sein, welche durch eine nicht tierschutzgerechte Haltung des Schlachttieres entstehen.

Im Rahmen der vorliegenden Weiterbildung kann die Bilderfassungseinheit auch mehrere Tiefenkameras mit jeweils einem Tiefenkameraerfassungsbereich aufweisen, welche vorzugsweise derart relativ zueinander angeordnet sind, dass die Tiefenkameraerfassungsbereiche unmittelbar aneinandergrenzen oder diese sich teilweise überschneiden.
Auf diese Weise kann als besonderer Vorteil die gesamte Oberfläche des zu überprüfenden Schlachttieres durch die Tiefenkameras erfasst werden.

Entsprechend der Bereitstellbarkeit der Bildpunktdaten erfolgt auch die Bereitstellung der Raumkoordinatendaten durch die Bilderfassungseinheit vorzugsweise in Echtzeit.

Ein erfindungsgemäßes Verfahren zur Tierschutzeinhaltungsbewertung an einem Schlachttier wird mittels einer Bilderfassungseinheit mit einem Bilderfassungsbereich, in welchem ein Abschnitt einer Oberfläche des Schlachttieres optisch erfassbar ist und in welchem Bildpunkte erfassbar sind, und wobei durch die Bilderfassungseinheit Bildpunktdaten der Bildpunkte übertragbar bereitstellbar sind sowie einer Auswertungseinheit, welche mit der Bilderfassungseinheit verbunden ist und durch welche die Bildpunktdaten erfassbar sind, wobei in der Auswertungseinheit ein normatives Modell des Schlachttieres hinterlegt ist und wobei das normative Modell eine tierschutzkonforme Ausbildung tierbezogener Merkmale (Tierschutzindikatoren) repräsentiert, und wobei durch die Auswertungseinheit die Bildpunktdaten in eine Beziehung zu dem normativen Modell setzbar und eine Abweichung der Bildpunktdaten von dem normativen Modell ermittelbar ist und wobei durch die Auswertungseinheit die Abweichung als Normabweichung des Schlachttieres von dem normativen Modell ausgebbar bereitstellbar ist, durchgeführt und weist die nachfolgenden Verfahrensschritte auf:
a) Erfassen der Bildpunkte durch die Bilderfassungseinheit,
b) übertragbares Bereitstellen der Bildpunktdaten der erfassten Bildpunkte durch die Bilderfassungseinheit und Übertragung an die Auswertungseinheit
c) Erfassen der bereitgestellten Bildpunktdaten durch die Auswertungseinheit,
d) Vergleichen der erfassten Bildpunktdaten mit dem normativen Modell durch die Auswertungseinheit,
e) Ermitteln einer vorhandenen Abweichung der Bildpunktdaten von dem normativen Modell durch die Auswertungseinheit,
f) ausgebbares Bereitstellen der ermittelten Abweichung als Normabweichung durch die Auswertungseinheit.

In Verfahrensschritt a) erfolgt das optische Erfassen der Bildpunkte in dem jeweils relevanten Abschnitt der Oberfläche des Schlachttieres.

Hierzu wird das Schlachttier vorzugsweise an der Bilderfassungseinheit vorbei geführt, sodass der relevante Abschnitt der Oberfläche in dem Bilderfassungsbereich erfasst wird. Die Erfassung der Bildpunkte kann hierbei zum Beispiel mittels eines Lichtschrankensignals gestartet und beendet werden.

Ebenso ist es möglich, einen Start oder ein Beenden der Erfassung der Bildpunkte durch die Bilderfassungseinheit selbst zu ermitteln und durchzuführen. Hierbei wird der Bilderfassungsbereich, in welchem ein Schlachttier an der Bilderfassungseinheit vorbeigeführt wird, kontinuierlich überwacht und bei einer Detektion des Schlachttieres automatisch die Erfassung der Bildpunkte gestartet. Nachdem das Schlachttier den Bilderfassungsbereich verlassen hat, wird die Erfassung der Bildpunkte durch die Bilderfassungseinheit automatisch beendet. Der Vorteil hierbei besteht insbesondere darin, dass keine zusätzliche Vorrichtung zur Initialisierung des Erfassungsvorgangs vorgesehen werden muss.

Alternativ kann, insbesondere bei einer mobilen Ausbildung der Bilderfassungseinheit, diese an dem Schlachttier vorbei geführt und so der relevante Abschnitt der Oberfläche in dem Bilderfassungsbereich erfasst werden.

Im zweiten Verfahrensschritt b) werden die Bildpunktdaten der erfassten Bildpunkte durch die Bilderfassungseinheit übertragbar bereitgestellt sowie nachfolgend an die Auswertungseinheit übertragen.
Die übertragbare Bereitstellung erfolgt hierbei vorzugsweise in Echtzeit, wobei sowohl die Bildpunktdaten jedes erfassten Bildpunktes für sich genommen übertragbar bereitstellbar sind oder Bildpunktdaten mehrerer Bildpunkte zu einem Datenpaket zusammengefasst und dieses dann übertragbar bereitstellbar ist. Alternativ ist es auch möglich, zuerst die Bildpunktdaten aller erfassten Bildpunkte in einem Datenpaket zwischenzuspeichern und dieses Datenpaket nach Abschluss des Bilderfassungsvorgangs übertragbar bereitzustellen.

Die übertragbar bereitgestellten Bildpunktdaten werden im Verfahrensschritt c) von der Auswertungseinheit erfasst. Hierzu ist die Auswertungseinheit, wie oben beschrieben, mit der Bilderfassungseinheit verbunden, wobei die Verbindung sowohl drahtgebunden als auch drahtlos ausgebildet sein kann.

Im anschließenden Verfahrensschritt d) werden die erfassten Bildpunktdaten durch die Auswertungseinheit mit dem normativen Modell eines Schlachttieres verglichen.
Das normative Modell des Schlachttieres ist hierfür in der Auswertungseinheit hinterlegt und enthält erfindungsgemäß eine tierschutzkonforme Ausbildung tierbezogener Merkmale des Schlachttieres.
Die tierbezogenen Merkmale werden auch als Tierschutzindikatoren bezeichnet.

Das normative Modell kann erfindungsgemäß normative Ausbildungen in Bezug auf beispielsweise konkrete Farbgebungen, Hautoberflächenbeschaffenheit, äußere Umrisse oder andere, für die Beurteilung der Einhaltung der Tierschutzbestimmungen relevante Merkmale des Schlachttieres aufweisen. Das normative Modell kann vorzugsweise normative Bildpunktdaten bereitstellen, welche nachfolgend als Referenzbildpunktdaten bezeichnet werden.

Zur Durchführung des Vergleichs mit dem normativen Modell ist die Auswertungseinheit erfindungsgemäß dazu in der Lage, die durch die Bilderfassungseinheit bereitstellbaren Bildpunktdaten in eine Beziehung zu dem normativen Modell zu setzen und im Verfahrensschritt e) eine vorhandene Abweichung der Bildpunktdaten von dem normativen Modell zu ermitteln. Die Auswertungseinheit führt dabei geeignete Auswertungsalgorithmen durch. Hierbei werden beispielsweise die Bildpunktdaten mit den entsprechend korrespondierenden Referenzbildpunktdaten abgeglichen und die Abweichung der Bildpunktdaten von den Referenzbildpunktdaten, beispielsweise im Bezug auf Flächenkoordinaten oder Helligkeits- beziehungsweise Farbwerte, ermittelt.

Im abschließenden Verfahrensschritt f) wird die ermittelte Abweichung der erfassten Bildpunktdaten von dem normativen Modell durch die Auswertungseinheit als Normabweichung ausgebbar bereitgestellt.
Das ausgebbare Bereitstellen der Normabweichung erfolgt beispielsweise anhand einer Bilddarstellung oder anhand eines definierten Ausgabewertes, aus welchem insbesondere die Art und/oder die Häufigkeit des Auftretens der jeweiligen Normabweichung hervorgehen.

In einer bevorzugten Weiterbildung des Verfahrens wird nach Verfahrensschritt f) ein weiterer Verfahrensschritt g) ausgeführt.
In dem Verfahrensschritt g) erfolgen eine Klassifizierung der Normabweichung und ein ausgebbares Bereitstellen der klassifizierten Normabweichung durch die Auswertungseinheit.

Hierbei wird die erfasste Normabweichung auf Basis ihrer Ausprägung durch die Auswertungseinheit einer vorher definierten Klasse von Normabweichungen zugeordnet und die Normabweichung anschließend, unter Angabe der zugeordneten Klasse, ausgebbar bereitgestellt.

Das Verfahren sieht vor, dass nach Verfahrensschritt f) ein zusätzlicher Verfahrensschritt f1) durchgeführt wird, wobei in Verfahrensschritt f1) eine Zuordnung der erfassten Normabweichung zu einem schlachttierbezogenen Datensatz erfolgt.

Ein solcher schlachttierbezogener Datensatz wird beispielsweise im Rahmen eines Schlachttierverarbeitungsprozesses für ein Schlachttier angelegt und enthält insbesondere Angaben zur Herkunft des Schlachttieres oder Angaben zu dessen Geschlecht und Gewicht.

Der schlachttierbezogene Datensatz ist vorliegend in einer Datenbank hinterlegt, welche entweder mit der Auswertungseinheit der Vorrichtung verbunden oder alternativ in diese integriert sein kann.

Die Zuordnung der Normabweichung zu dem schlachttierbezogenen Datensatz ermöglicht insbesondere eine nachvollziebare Archivierung der Normabweichung sowie eine langfristige Nachverfolgbarkeit der vorgenommenen Tierschutzeinhaltungsbewertung.

Innerhalb des erfindungsgemäßen Verfahrens kann der Verfahrensschritt f1) vor oder nach dem Verfahrensschritt g) durchgeführt werden.

Darüber hinaus sieht eine vorteilhafte Weiterbildung des Verfahrens vor, dass nach Verfahrensschritt f) ein zusätzlicher Verfahrensschritt i) ausgeführt wird, wobei im Verfahrensschritt i) anhand der erfassten Normabweichung eine Ansteuerung externer Einheiten erfolgt.

Als externe Einheiten werden in diesem Zusammenhang beispielsweise Sortiereinheiten bezeichnet, welche dazu in der Lage sind, ein überprüftes Schlachttier aus dem laufenden Schlachttierverarbeitungsprozess auszuschleusen oder dieses einer speziellen Weiterverarbeitung zuzuführen.

In der hier beschriebenen Weiterbildung ist die Auswertungseinheit dazu in der Lage, anhand der erfassten Normabweichung ein Steuersignal bereitzustellen, welches dann von der Auswertungseinheit an die externen Einheiten übertragen wird.

Die Erfindung wird als Ausführungsbeispiel anhand von
Fig. 1 Prinzipdarstellung Draufsicht mit schematischer Darstellung des Schlachttieres
Fig. 2 Prinzipdarstellung Seitenansicht
näher erläutert.

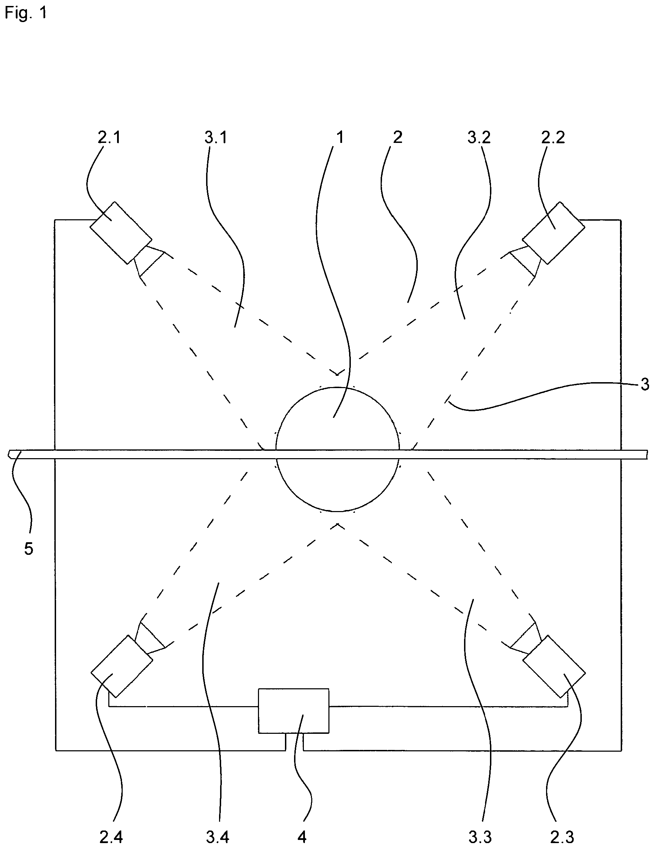

Fig. 1 zeigt eine erfindungsgemäße Vorrichtung zur Tierschutzeinhaltungsbewertung an einem Schlachttier 1 in einer Draufsicht, wobei das Schlachttier 1 vorliegend lediglich schematisch dargestellt ist.

Die Vorrichtung weist vorliegend eine Bilderfassungseinheit 2 mit einem Bilderfassungsbereich 3 auf, wobei die Bilderfassungseinheit 2 vorliegend vier Bildkameras 2.1 bis 2.4 mit jeweils einem Bilderfassungsteilbereich 3.1 bis 3.4 gebildet wird und wobei sich der Bilderfassungsbereich 3 aus den Bilderfassungsteilbereichen 3.1 bis 3.4 zusammensetzt.

In dem Bilderfassungsbereich 3 sind erfindungsgemäß Bildpunkte auf der Oberfläche des Schlachttieres 1 erfassbar, wobei die Bildkameras 2.1 bis 2.4 vorliegend derart angeordnet sind, dass sich die Bilderfassungsteilbereiche 3.1 bis 3.4 teilweise überschneiden und auf diese Weise in dem Bilderfassungsbereich 3 die gesamte Oberfläche des Schlachttieres 1 erfassbar ist.
Die Bilderfassungseinheit 2 ist erfindungsgemäß dazu in der Lage, Bildpunktdaten der in dem Bilderfassungsbereich 3 erfassten Bildpunkte übertragbar bereitzustellen.
Bei den Bildpunktdaten handelt es sich vorliegend insbesondere um Flächenkoordinaten und Farbwerte der erfassten Bildpunkte.

Die Vorrichtung weist, wie in Fig. 1 dargestellt, eine Auswertungseinheit 4 auf, welche mit den Bildkameras 2.1 bis 2.4 und somit mit der Bilderfassungseinheit 2 verbunden ist und welche dazu in der Lage ist, die Bildpunktdaten der Bilderfassungseinheit 2 zu erfassen.

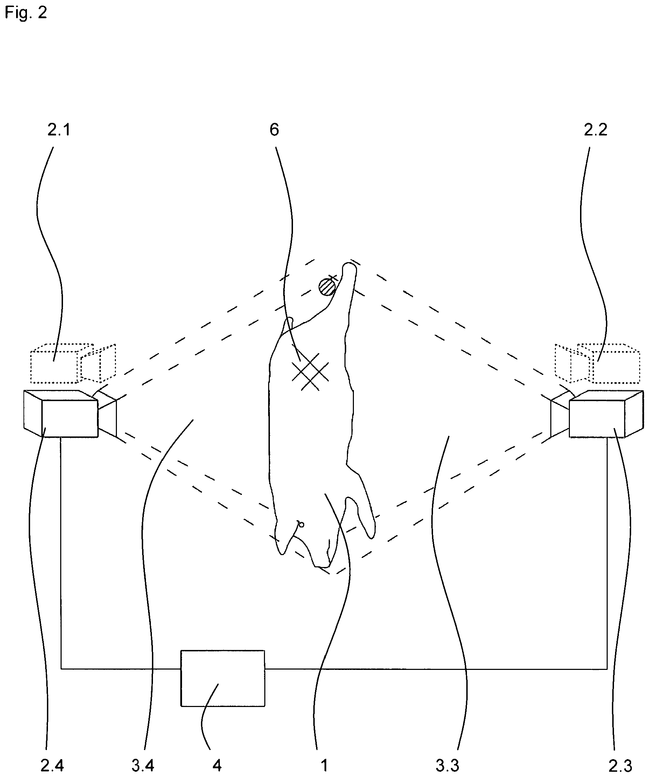

Fig. 2 zeigt des Weiteren eine Seitenansicht der erfindungsgemäßen Vorrichtung, wobei das Schlachttier 1 als Schlachtschwein vorliegt und im hinteren Bereich Kratzspuren 6 aufweist.
Die Kratzspuren 6 stellen vorliegend eine Abweichung des Schlachttieres 1 von einer vorher definierten Ausbildung eines tierbezogenen Merkmals dar, welche auf eine nicht tierschutzkonforme Haltung des Schlachttieres 1 hindeutet.

Für eine bessere Übersichtlichkeit sind die in Fig. 2 lediglich die Bildkameras 2.3 und 2.4 mit deren Bilderfassungsteilbereichen 3.3 und 3.4 vollständig dargestellt. Die übrigen Bildkameras 2.1 und 2.2 sind vorliegend lediglich angedeutet dargestellt.

In der Auswertungseinheit 4 ist erfindungsgemäß ein normatives Modell des Schlachttieres 1 hinterlegt, welches eine tierschutzkonforme Ausbildung der Tierschutzindikatoren repräsentiert. Anders formuliert repräsentiert das normative Modell einen tierschutzgerechten Idealzustand des Schlachttieres 1, frei von jeglichen, in einem Zusammenhang mit einer nicht tierschutzkonformen Haltung stehenden, Verletzungen.
Das normative Modell umfasst im vorliegenden Ausführungsbeispiel insbesondere die Farbe und repräsentative äußere Konturen, wie beispielsweise Ohr- oder Schwanzkonturen, des Schlachttieres 1.

Als Grundlage für eine Tierschutzeinhaltungsbewertung ist die Auswertungseinheit 4 vorliegend dazu in der Lage, die erfassten Bildpunktdaten mit dem normativen Modell abzugleichen und die, durch die Kratzspuren 6 verursachte, Abweichung der Bildpunktdaten von dem normativen Modell automatisch zu erfassen.

Die erfasste Abweichung ist anschließend durch die Auswertungseinheit 4 als Normabweichung ausgebbar bereitstellbar, anhand derer die Tierschutzeinhaltungsbewertung durchgeführt wird.

### Verwendete Bezugszeichen

- 1: Schlachttier
- 2: Bilderfassungseinheit
- 2.1 bis 2.4: Bildkameras
- 3: Bilderfassungsbereich
- 3.1 bis 3.4: Bilderfassungsteilbereiche
- 4: Auswertungseinheit
- 5: Rohrbahn
- 6: Kratzspuren

## Patentansprüche

1. Verfahren zur Tierschutzeinhaltungsbewertung an einem Schlachttier (1), mittels einer Bilderfassungseinheit (2) mit einem Bilderfassungsbereich (3), in welchem ein Abschnitt einer Oberfläche des Schlachttieres (1) optisch erfassbar ist und in welchem Bildpunkte erfassbar sind, und wobei durch die Bilderfassungseinheit (2) Bildpunktdaten der Bildpunkte übertragbar bereitstellbar sind,
und mittels einer Auswertungseinheit (4), welche mit der Bilderfassungseinheit (2) verbunden ist und durch welche die Bildpunktdaten erfassbar sind,
**dadurch gekennzeichnet,**
**dass** in der Auswertungseinheit (4) ein normatives Modell des Schlachttieres (1) hinterlegt ist und das normative Modell eine tierschutzkonforme Ausbildung tierbezogener Merkmale (Tierschutzindikatoren) repräsentiert, und durch die Auswertungseinheit (4) die Bildpunktdaten in eine Beziehung zu dem normativen Modell setzbar und eine Abweichung der Bildpunktdaten von dem normativen Modell ermittelbar und als Normabweichung des Schlachttieres (1) von dem normativen Modell ausgebbar bereitstellbar ist,
aufweisend die nachfolgenden Verfahrensschritte:
a) Erfassen der Bildpunkte durch die Bilderfassungseinheit (2),
b) übertragbares Bereitstellen der Bildpunktdaten der erfassten Bildpunkte durch die Bilderfassungseinheit (2),
c) Erfassen der bereitgestellten Bildpunktdaten durch die Auswertungseinheit (4),
d) Vergleichen der erfassten Bildpunktdaten mit dem normativen Modell durch die Auswertungseinheit (4),
e) Ermitteln einer vorhandenen Abweichung der Bildpunktdaten von dem normativen Modell durch die Auswertungseinheit (4),
f) ausgebbares Bereitstellen der ermittelten Abweichung als Normabweichung durch die Auswertungseinheit (4)
f1) Zuordnen der Normabweichung zu einem schlachttierbezogenen Datensatz.

2. Verfahren nach Anspruch 1,
wobei nach Verfahrensschritt f) ein weiterer Verfahrensschritt g) ausgeführt wird und wobei in Verfahrensschritt g) eine Klassifizierung der Normabweichung und ein ausgebbares Bereitstellen der klassifizierten Normabweichung durch die Auswertungseinheit (4) erfolgt.

3. Verfahren nach einem der Ansprüche 1 bis 2,
wobei nach Verfahrensschritt f) ein weiterer Verfahrensschritt i) ausgeführt wird und wobei in Verfahrensschritt i), anhand der Normabweichung, eine Steuerung externer Einheiten erfolgt.

## Claims

1. A method for the assessment of animal welfare compliance on a slaughtered animal (1)
by means of an image acquisition unit (2) with an image acquisition range (3) in which a section of a surface of the slaughtered animal (1) can be optically captured and in which pixels can be captured, and wherein the image acquisition unit (2) is capable of providing the pixel data of the pixels in a transferable form,
and by means of an evaluation unit (4) which is connected to the image acquisition unit (2) and is capable of recording the pixel data, **characterized in**
**that** a normative model of the slaughter animal (1) is stored in the evaluation unit (4) and the normative model represents a formation of animal-related characteristics compliant with animal welfare (animal welfare indicators), and the evaluation unit (4) is capable of correlating the pixel data with the normative model and identifying a deviation of the pixel data from the normative model and providing it in a transferable manner as a norm deviation of the slaughter animal (1) from the normative model, comprising the following procedural steps:
a) capture of the pixels by the image acquisition unit (2),
b) provision of the pixel data of the captured pixels in a transferable manner by the image acquisition unit (2),
c) acquisition of the provided pixel data by the evaluation unit (4),
d) comparison of the acquired pixel data with the normative model by the evaluation unit (4),
e) identification of an existing deviation of the pixel data from the normative model by the evaluation unit (4),
f) outputable provision of the determined deviation as a deviation from the norm by the evaluation unit (4)
f1) assignment of the deviation from the norm to a slaughter animal related data set.

2. The method according to claim 1,
wherein a further procedural step g) is taken after the procedural step f), and wherein in the procedural step g) the deviation from the norm is classified and the evaluation unit (4) provides the classified deviation from the norm such that it can be output.

3. The method according to one of claims 1 to 2,
wherein a further procedural step i) is taken after the procedural step f), and wherein in the procedural step i) a control of external units based on the deviation from the norm is effected.

## Revendications

1. Procédé d'évaluation du respect de la protection des animaux concernant un animal de boucherie (1),
au moyen d'une unité de saisie d'images (2) une zone de saisie d'images (3), dans laquelle une zone d'une surface de l'animal de boucherie (1) peut être acquise optiquement et dans laquelle des points d'image peuvent être collectés, et dans lequel les données des points d'image peuvent être fournies de manière transmissible par l'unité de saisie d'images (2),
et au moyen d'une unité d'évaluation (4) qui est reliée à l'unité de saisie d'images (2) et au moyen de laquelle les données de points d'image peuvent être acquises,
est **caractérisé en ce**
**qu'**un modèle normatif de l'animal de boucherie (1) est déposé dans l'unité d'évaluation (4) et le modèle normatif représente une formation des caractéristiques liées à l'animal (indicateurs de protection des animaux) qui est conforme aux exigences de protection animale, et l'unité d'évaluation (4) peut mettre les données de points d'image en relation avec le modèle normatif et une déviation des données de points d'image par rapport au modèle normatif peut être déterminée et peut être mis à disposition comme une déviation de l'animal de boucherie (1) par rapport au modèle normatif,
comportant les suivantes étapes de procédé:
a) acquisition des points d'image par l'unité de saisie d'images (2),
b) mise à disposition de manière transmissible des données des points d'image acquis par l'unité de saisie d'images (2),
c) acquisition des données de points d'image fournies par l'unité d'évaluation (4),
d) la comparaison des données de points d'image acquises avec le modèle normatif par l'unité d'évaluation (4),
e) détermination d'une déviation existante des données de points d'image par rapport au modèle normatif par l'unité d'évaluation (4),
f) sortie de la déviation déterminée comme déviation standard par l'unité d'évaluation (4)
f1) attribution de la déviation par rapport à la norme à l'égard d'un ensemble de données relatif à un animal de boucherie.

2. Procédé suivant la revendication 1,
dans lequel, après l'étape f) de procédé, une autre étape g) de procédé est réalisée et dans lequel, dans l'étape g) de procédé, une classification de la déviation par rapport à la norme et une mise à disposition affichable de la déviation classifiée par rapport à la norme par l'unité d'évaluation (4) ont lieu.

3. Procédé selon l'une des revendications 1 à 2,
dans lequel, après l'étape f) de procédé, une autre étape i) de procédé est réalisée et dans lequel, à l'étape i) de procédé, sur la base de la déviation par rapport à la norme, un contrôle des unités externes a lieu.
